# EUROPÄISCHE PATENTSCHRIFT

(11) **EP 3 127 735 B1**
(45) Veröffentlichungstag und Bekanntmachung des Hinweises auf die Patenterteilung: **05.07.2017**
(21) Anmeldenummer: 15180185.9
(22) Anmeldetag: 07.08.2015
(51) Int. Cl.: B60K 15/04

(54) **TANKEINFÜLLSTUTZEN FÜR EIN KRAFTFAHRZEUG MIT VERBESSERTER DIFFUSIONSFESTIGKEIT**
FUEL FILLING NECK FOR A VEHICLE WITH IMPROVED DIFFUSION STRENGTH
MANCHON DE REMPLISSAGE DE RÉSERVOIR POUR UN VÉHICULE AYANT UNE RÉSISTANCE AMÉLIORÉE À LA DIFFUSION

(43) Veröffentlichungstag der Anmeldung: 08.02.2017
(73) Patentinhaber: Magna Steyr Fuel Systems GesmbH, 8261 Sinabelkirchen (AT)
(72) Erfinder: HENDLER, René, 8020 Graz (AT); BINDER, Michael, 8200 Gleisdorf (AT)
(74) Vertreter: Zangger, Bernd

(56) Entgegenhaltungen:
- EP-A1- 2 213 500
- US-A1- 2005 184 515
- US-A1- 2009 127 805
- US-A1- 2010 243 104

## Beschreibung

### TECHNISCHES GEBIET

Die Erfindung betrifft einen Tankeinfüllstutzen für ein Kraftfahrzeug, der ein Kunststoffrohr mit einer rohrförmigen Sperrschicht umfasst, welche Diffusion von Kohlenwasserstoff stärker hemmt als das übrige Kunststoffrohr, einen das Kunststoffrohr an dessen Ende umschließenden Einfüllkopf aus Metall sowie eine zwischen dem Kunststoffrohr und dem Einfüllkopf angeordnete Dichtung aus einem Elastomer. Des Weiteren betrifft die Erfindung ein Kraftfahrzeug mit einem solchen Einfüllstutzen.

### STAND DER TECHNIK

Ein solcher Einfüllstutzen und ein solches Kraftfahrzeug sind aus dem Stand der Technik grundsätzlich bekannt. Beispielsweise offenbart die DE 199 43 673 A1 dazu einen Einsatz aus thermoplastischem Material zur Verbindung mit einem Kraftstofftank. Der Einsatz wird durch Pressformen eines für Kohlenwasserstoffe schwer permeablen Laminats erhalten.

Weiterhin offenbart die DE 10 2005 050 564 A1 einen Einfüllstutzen mit einer Dichtung, welcher mit einem aus Kunstharz hergestellten Kraftstofftank verbunden ist. Der Kraftstofftank besteht aus High Density Polyethylen mit einer darin eingebetteten Schicht aus Ethylen-Vinylalkohol-Copolymer (EVOH).

In den aus dem Stand der Technik bekannten Konstruktionen ergibt sich unter Umgehung einer Sperrschicht und einer Dichtung ein Pfad, über den Kohlenwasserstoffe in unerwünschter Weise aus dem Inneren des Tanks respektive aus dem Inneren des Tankeinfüllstutzens nach außen diffundieren können. Insbesondere im Hinblick auf gestiegene gesetzliche Anforderungen hinsichtlich der Kohlenwasserstoff-Emissionen bei Kraftstofftanksystemen kann die Dichtheit des Systems auf diese Weise nicht in ausreichender Qualität gewährleistet werden, im Speziellen nicht über die gesamte Lebenszeit eines Kraftfahrzeugs.

Aus der EP 2 213 500 A1 ist eine Kraftstoffleitung, insbesondere ein Einfüllstutzen, bekannt, für einen Kraftstofftank, mit einem Rohr und einer Anschlussgeometrie, wobei das Rohr zumindest an einem Ende glattwandig ist und die Anschlussgeometrie an das Ende angepresst ist und wobei das Rohr eine Barriereschicht aufweist.

Die US 2009/127805 A1, in der die Merkmale des Oberbegriffs von Anspruch 1 enthalten sind, offenbart eine Anordnung, umfassend eine erste Komponente, die zumindest teilweise einen ersten im allgemeinen röhrenförmigen Hohlraum definiert; eine Sperrschicht innerhalb der ersten Komponente, um die erste Komponente in eine innere Schicht und eine äußere Schicht zu trennen; wobei die erste Komponente ein Anschlußende mit einer Stirnfläche aufweist, an der die Sperrschicht dem ersten Hohlraum ausgesetzt ist; eine zweite Komponente, die zumindest teilweise einen zweiten Hohlraum definiert; wobei die zweite Komponente in Bezug auf die erste Komponente so angeordnet ist, dass der erste Hohlraum in Verbindung mit dem zweiten Hohlraum steht; eine Dichtung, die die zweite Komponente zur ersten Komponente abdichtet; und wobei die Dichtung in Kontakt mit der zweiten Komponente und der ersten Komponente im Wesentlichen an der Sperrschicht angeordnet ist, so dass die Sperrschicht und die Dichtung dabei zumindest einen Teil der Permeation von der äußeren Schicht der ersten Komponente aus dem ersten Hohlraum blockiert.

### OFFENBARUNG DER ERFINDUNG

Eine Aufgabe der Erfindung ist es daher, einen verbesserten Tankeinfüllstutzen und ein verbessertes Kraftfahrzeug anzugeben. Insbesondere soll die Emission von Kohlenwasserstoffen aus dem Kraftstofftanksystem gegenüber dem Stand der Technik verringert werden.

Die Aufgabe der Erfindung wird mit einem Einfüllstutzen der eingangs genannten Art gelöst, mit Merkmalen gemäß Anspruch 1.

Die Aufgabe der Erfindung wird auch mit einem Kraftfahrzeug gelöst, das einen Tankeinfüllstutzen der oben genannten Art aufweist.

Durch die vorgeschlagenen Maßnahmen kann eine geschlossene Barriere für Kohlenwasserstoffe errichtet werden, wodurch die Dichtheit des Tankeinfüllstutzens deutlich verbessert wird, und die Kohlenwasserstoff-Emissionen dementsprechend verringert werden können. Die Dichtung kann insbesondere aus einem Kautschuk hergestellt und/oder als O-Ring ausgebildet sein.

"Sperrschicht" heißt nicht, dass die Diffusion zwingend zu 100% verhindert wird. Die Sperrschicht hemmt aber zumindest die Diffusion, das heißt, die Permeabilität der Sperrschicht ist niedriger als die Permeabilität des übrigen Rohrs. Mit anderen Worten ist die Sperrschicht weniger diffusionsoffen ist als das übrige Kunststoffrohr, beziehungsweise ist die Sperrschicht im Hinblick auf Diffusion von Kohlenwasserstoff dichter als das übrige Kunststoffrohr. Insbesondere kann vorgesehen sein, dass die Sperrschicht die Diffusion von Kohlenwasserstoff wenigstens zu einem Grad von 95% verhindert.

Die Aufgabe der Erfindung kann auch darin gesehen werden, zu erkennen, dass sich in den aus dem Stand der Technik bekannten Lösungen unter Umgehung einer Sperrschicht und einer Dichtung ein Pfad ergibt, über den Kohlenwasserstoffe in unerwünschter Weise aus dem Inneren des Tanks respektive aus dem Inneren des Tankeinfüllstutzens nach außen diffundieren können.

Erfindungsgemäß ist die Sperrschicht im Bereich der Dichtung dicker ausgeführt ist als im übrigen Kunststoffohr. Auf diese Weise können Toleranzen hinsichtlich der Lage der Sperrschicht besser ausgeglichen werden, beziehungsweise kann die Sperrschicht im übrigen Rohr relativ dünn ausgeführt werden.

Erfindungsgemäß ist die Sperrschicht in das Kunststoffrohr eingebettet. Im Querschnitt gesehen ist die Sperrschicht dann als Kreis sichtbar, dessen Durchmesser größer ist als der Innendurchmesser des Rohrs und kleiner als der Außendurchmesser des Rohrs. Durch diese Maßnahmen kann die relativ dünne und empfindliche Sperrschicht gut gegen Beschädigungen geschützt werden.

Günstig ist es, wenn die Sperrschicht aus Ethylen-Vinylalkohol-Copolymer (EVOH) besteht. Auf diese Weise kann die Diffusion der Kohlenwasserstoffe besonders gut verhindert beziehungsweise gehemmt werden.

Günstig ist es zudem, wenn die Dichtung radial außerhalb der Sperrschicht angeordnet ist. Auf diese Weise kann eine für die Dichtwirkung nötige Flächenpressung dadurch realisiert werden, dass die Durchmesser des Kunststoffrohrs und des Einfüllkopfs im Bereich der Dichtung entsprechend gewählt werden. Konkret wird der Spalt zwischen der inneren und der äußeren Auflagefläche der Dichtung kleiner gewählt als die Dichtung dick ist.

Günstig ist es aber auch, wenn die Dichtung axial außerhalb der Sperrschicht angeordnet ist. Auf diese Weise kann eine Dichtfläche insbesondere durch Absägen/Ablängen, Planfräsen oder Planschleifen des Kunststoffrohrs hergestellt werden.

Besonders vorteilhaft ist es schließlich, wenn die Dichtung in einer Nut angeordnet ist und ein Nutgrund zumindest teilweise durch die Sperrschicht gebildet ist. Dadurch kann eine Kopplung zwischen der Sperrschicht und der Dichtung auf besonders einfache Weise hergestellt werden, beispielweise indem das Kunststoffrohr bis zur Sperrschicht aufgefräst oder aufgesägt wird. Denkbar wäre insbesondere auch, die Nut direkt bei der Extrusion des Kunststoffrohrs herzustellen, etwa durch kurzfristiges Ausschalten eines Extruders für eine außerhalb der Sperrschicht liegenden Schicht.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: einen Tankeinfüllstutzen nach dem Stand der Technik;
- Figur 2: eine Detailansicht des Tankeinfüllstutzens aus Fig. 1;
- Figur 3: einen erfindungsgemäßen Tankeinfüllstutzen mit einer radial auf der Sperrschicht sitzenden Dichtung und
- Figur 4: einen erfindungsgemäßen Tankeinfüllstutzen mit einer axial auf der Sperrschicht sitzenden Dichtung.

### DETAILIERTE BESCHREIBUNG DER ERFINDUNG

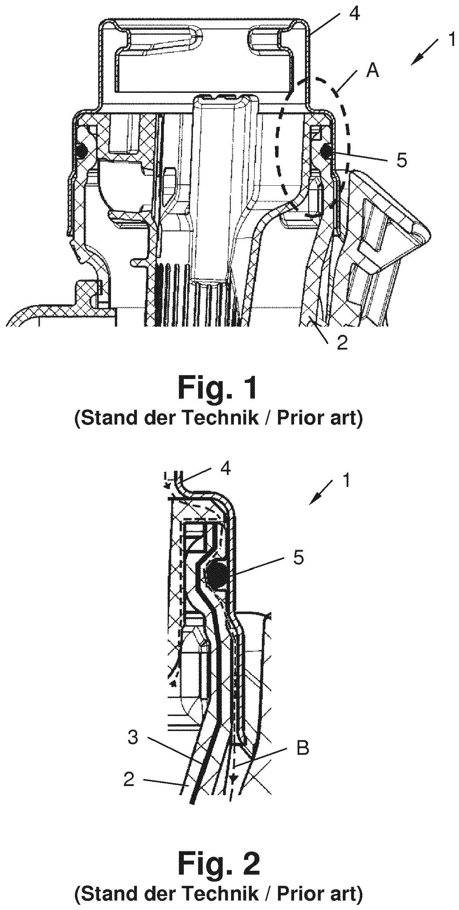

Fig. 1 zeigt einen Tankeinfüllstutzen 1 nach dem Stand der Technik. Der Tankeinfüllstutzen 1 umfasst ein Kunststoffrohr 2 mit einer rohrförmigen Sperrschicht 3, einen das Kunststoffrohr 2 an dessen Ende umschließenden Einfüllkopf 4 und eine zwischen dem Kunststoffrohr 2 und dem Einfüllkopf 4 angeordnete Dichtung 5.

Fig. 2 zeigt ein Detail A des in der Fig. 1 dargestellten Tankeinfüllstutzens 1. Gut zu sehen ist, dass sich unter Umgehung der Sperrschicht 3 und der Dichtung 5 ein Pfad B ergibt, über den Kohlenwasserstoffe aus dem Inneren des Tankeinfüllstutzens 1 nach außen diffundieren können.

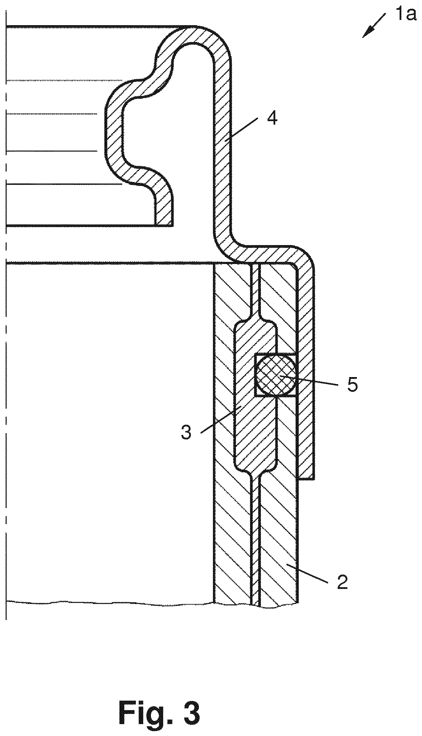

Die Fig. 3 zeigt nun einen verbesserten Tankeinfüllstutzen 1a für ein Kraftfahrzeug, der ein Kunststoffrohr 2 mit einer rohrförmigen Sperrschicht 3 umfasst, welche Diffusion von Kohlenwasserstoff stärker hemmt als das übrige Kunststoffrohr 2, einen das Kunststoffrohr 2 an dessen Ende umschließenden Einfüllkopf 4 aus Metall, sowie eine zwischen dem Kunststoffrohr 2 und dem Einfüllkopf 4 angeordnete Dichtung 5 aus einem Elastomer. Die Dichtung 5 berührt dabei die Sperrschicht 3. Eine Diffusion von Kohlenwasserstoffen nach außen unter Umgehung der Sperrschicht 3 und der Dichtung 5 ist daher nicht mehr möglich. Die Dichtheit des Systems wird dadurch deutlich verbessert.

Die Sperrschicht 3 kann insbesondere aus Ethylen-Vinylalkohol-Copolymer (EVOH) bestehen und ist generell, wie in der Fig. 3 dargestellt, vorteilhaft in das Kunststoffrohr 2 eingebettet. Dadurch ist die Sperrschicht 3, die aus Kostengründen häufig nur einige wenige Zehntelmillimeter dick ist, gut geschützt. Im Querschnitt gesehen ist die Sperrschicht 3 daher als Kreis sichtbar, dessen Durchmesser größer ist als der Innendurchmesser des Kunststoffrohrs 2 und kleiner als der Außendurchmesser des Kunststoffrohrs 2.

Die Dichtung 5 kann insbesondere aus einem Kautschuk hergestellt und/oder als O-Ring ausgebildet sein. Die Dichtung 5 kann zum Beispiel aus Acrylnitril-Butadien-Kautschuk (NBR), Fluorkautschuk (FPM/FKM) oder Fluorsilikon (FVMQ) gefertigt sein.

Beispielsweise kann das Kunststoffrohr 2 als Multilayer-Kunststoff-Blasformteil mit (insbesondere) sieben Schichten ausgeführt werden, wobei sich neben verschiedenen Schichten aus High Density Polyethylen (HDPE) in der Mitte eine permeationsdichte EVOH-Sperrschicht 3 befindet, welche durch Haftvermittler an die HDPE- Schichten gebunden wird. Als Haftvermittler kann beispielsweise modifiziertes Low Density Polyethylen (LDPE) verwendet werden.

Die Sperrschicht 3 verhindert die Diffusion von Kohlenwasserstoffen nicht zwingend zu 100%. Die Sperrschicht 3 hemmt aber zumindest die Diffusion, das heißt, die Permeabilität der Sperrschicht 3 ist niedriger als die Permeabilität des übrigen Kunststoffrohrs 2.

In dem in der Fig. 3 dargestellten Beispiel ist die Dichtung 5 radial außerhalb der Sperrschicht 3 angeordnet. Konkret ist die Dichtung 5 in einer Nut angeordnet ist, und der Nutgrund ist durch die Sperrschicht 3 gebildet. Beispielsweise kann die Nut durch Fräsen oder Sägen hergestellt sein. Die Nut kann beispielsweise auch direkt bei der Extrusion des Kunststoffrohrs 2 hergestellt werden, etwa durch kurzfristiges Ausschalten eines äußeren HDPE- Extruders, welcher für eine außerhalb der Sperrschicht 3 liegende Schicht vorgesehen ist.

Generell ist es von Vorteil, wenn die Sperrschicht 3 im Bereich der Dichtung 5 dicker ausgeführt ist als im übrigen Kunststoffohr 2, so wie dies in der Fig. 3 dargestellt ist. Auf diese Weise können Toleranzen hinsichtlich der Lage der Sperrschicht 3, der Dichtung 5 und der Nut besser ausgeglichen werden. Insbesondere betrifft dies Ausführungsformen, bei denen die Nut spanend hergestellt wird.

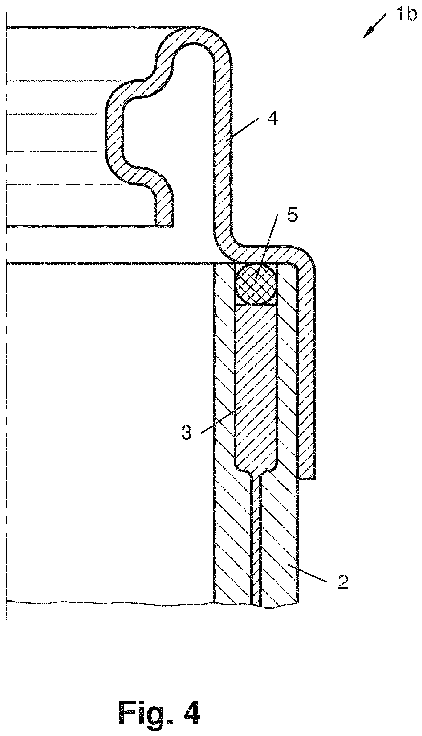

Fig. 4 zeigt nun eines Ausführungsform eines Tankeinfüllstutzens 1b, welcher dem in der Fig. 3 dargestellten Tankeinfüllstutzen 1a sehr ähnlich ist. Im Unterschied dazu ist die Dichtung 5 aber nicht radial außerhalb der Sperrschicht 3 angeordnet, sondern axial außerhalb der Sperrschicht 3. Auch hier ist es von Vorteil, wenn die Sperrschicht 3 im Bereich der Dichtung 5 dicker ausgeführt ist als im übrigen Kunststoffohr 2, so wie dies in der Fig. 4 dargestellt ist. Auf diese Weise ist der Tankeinfüllstutzen 1b auch dann noch dicht, wenn die Dichtung nicht exakt mittig auf der Sperrschicht 3 aufliegt. Die Sperrschicht 3 kann beispielsweise durch Sägen oder Planfräsen freigelegt werden.

Abschließend wird festgehalten, dass die Bestandteile in der Figur ggf. nicht maßstabsgetreu dargestellt sind. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen. Weiterhin wird angemerkt, dass der dargestellte Tankeinfüllstutzen 1a, 1b selbstverständlich mehr oder weniger Komponenten als dargestellt aufweisen kann, ohne dass dadurch der Grundgedanke der vorliegenden Erfindung, wie beansprucht, verlassen werden würde.

## Patentansprüche

1. Tankeinfüllstutzen (1a, 1b) für ein Kraftfahrzeug, umfassend
- ein Kunststoffrohr (2) mit einer rohrförmigen Sperrschicht (3), welche Diffusion von Kohlenwasserstoff stärker hemmt als das übrige Kunststoffrohr (2),
- einen das Kunststoffrohr (2) an dessen Ende umschließenden Einfüllkopf (4) aus Metall und
- eine zwischen dem Kunststoffrohr (2) und dem Einfüllkopf (4) angeordnete Dichtung (5) aus einem Elastomer, wobei
- die Dichtung (5) die Sperrschicht (3) berührt,
**dadurch gekennzeichnet, dass** die Sperrschicht (3) im Bereich der Dichtung (5) dicker ausgeführt ist als im übrigen Kunststoffohr (2), wobei die Sperrschicht (3) in das Kunststoffrohr (2) eingebettet ist.

2. Tankeinfüllstutzen (1a, 1b) nach Anspruch 1, **dadurch gekennzeichnet, dass** die Sperrschicht (3) aus Ethylen-Vinylalkohol-Copolymer besteht.

3. Tankeinfüllstutzen (1a, 1b) nach einem der Ansprüche 1 bis 2, **dadurch gekennzeichnet, dass** die Dichtung (5) radial außerhalb der Sperrschicht (3) angeordnet ist.

4. Tankeinfüllstutzen nach einem der Ansprüche 1 bis 2, **dadurch gekennzeichnet, dass** die Dichtung (5) axial außerhalb der Sperrschicht (3) angeordnet ist.

5. Tankeinfüllstutzen (1a, 1b) nach einem der Ansprüche 1 bis 4, **dadurch gekennzeichnet, dass** die Dichtung (5) in einer Nut angeordnet ist und ein Nutgrund zumindest teilweise durch die Sperrschicht (3) gebildet ist.

6. Kraftfahrzeug, **gekennzeichnet durch** einen Tankeinfüllstutzen (1) nach einem der Ansprüche 1 bis 5.

## Claims

1. Tank filler neck (la, 1b) for a motor vehicle, comprising
- a plastic tube (2) having a tubular barrier layer (3), which inhibits diffusion of hydrocarbons more than the rest of the plastic tube (2),
- a filler head (4) composed of metal surrounding the plastic tube (2) at the end thereof, and
- a seal (5) composed of an elastomer arranged between the plastic tube (2) and the filler head (4),
wherein
- the seal (5) touches the barrier layer (3), **characterized in that** the barrier layer (3) is made thicker in the region of the seal (5) than in the rest of the plastic tube (2), wherein the barrier layer (3) is embedded into the plastic tube (2).

2. Tank filler neck (la, 1b) according to Claim 1, **characterized in that** the barrier layer (3) is composed of ethylene vinyl alcohol copolymer.

3. Tank filler neck (la, 1b) according to either of Claims 1 and 2, **characterized in that** the seal (5) is arranged radially to the outside of the barrier layer (3).

4. Tank filler neck according to either of Claims 1 and 2, **characterized in that** the seal (5) is arranged axially to the outside of the barrier layer (3).

5. Tank filler neck (la, 1b) according to one of Claims 1 to 4, **characterized in that** the seal (5) is arranged in a groove, and a groove base is formed at least partially by the barrier layer (3).

6. Motor vehicle, **characterized by** a tank filler neck (1) according to one of Claims 1 to 5.

## Revendications

1. Manchon de remplissage de réservoir (la, 1b) pour un véhicule, comprenant :
- un tube en plastique (2) avec une couche barrière de forme tubulaire (3) qui empêche plus fortement la diffusion d'hydrocarbures que le reste du tube en plastique (2),
- une tête de remplissage (4) en métal, entourant le tube en plastique (2) au niveau de son extrémité et
- un joint d'étanchéité (5) en élastomère disposé entre le tube en plastique (2) et la tête de remplissage (4),
- le joint d'étanchéité (5) venant en contact avec la couche barrière (3),
**caractérisé en ce que** la couche barrière (3) dans la région du joint d'étanchéité (5) est plus épaisse que dans le reste du tube en plastique (2), la couche barrière (3) étant noyée dans le tube en plastique (2).

2. Manchon de remplissage de réservoir (la, 1b) selon la revendication 1, **caractérisé en ce que** la couche barrière (3) se compose d'un copolymère d'éthylène et d'alcool vinylique.

3. Manchon de remplissage de réservoir (la, 1b) selon l'une quelconque des revendications 1 à 2, **caractérisé en ce que** le joint d'étanchéité (5) est disposé radialement à l'extérieur de la couche barrière (3).

4. Manchon de remplissage de réservoir selon l'une quelconque des revendications 1 à 2, **caractérisé en ce que** le joint d'étanchéité (5) est disposé axialement à l'extérieur de la couche barrière (3).

5. Manchon de remplissage de réservoir (la, 1b) selon l'une quelconque des revendications 1 à 4, **caractérisé en ce que** le joint d'étanchéité (5) est disposé dans une rainure et un fond de rainure est formé au moins en partie par la couche barrière (3).

6. Véhicule **caractérisé par** un manchon de remplissage de réservoir (1) selon l'une quelconque des revendications 1 à 5.
